# EUROPÄISCHE PATENTSCHRIFT

(11) **EP 2 226 654 B1**
(45) Veröffentlichungstag und Bekanntmachung des Hinweises auf die Patenterteilung: **30.05.2018**
(21) Anmeldenummer: 10001176.6
(22) Anmeldetag: 05.02.2010
(51) Int. Cl.: G01V 8/10, G01V 8/12

(54) **Optischer Sensor**
Optical sensor
Capteur optique

(30) Priorität: 07.03.2009 DE 102009012273
(43) Veröffentlichungstag der Anmeldung: 08.09.2010
(73) Patentinhaber: Leuze electronic GmbH + Co. KG, 73277 Owen/Teck (DE)
(72) Erfinder: Dokman, Nikola, 72639 Neuffen (DE); Huss, Jörg, 73230 Kirchheim/Teck (DE); Carrle, Wolfgang, 73277 Owen/Teck (DE)
(74) Vertreter: Ruckh, Rainer Gerhard

(56) Entgegenhaltungen:
- EP-A1- 1 845 401
- WO-A1-2006/061752
- WO-A1-2007/107916
- WO-A2-2007/069198
- US-A1- 2005 219 840
- US-A1- 2005 264 686
- US-A1- 2008 037 271
- US-A1- 2008 198 604
- US-A1- 2008 239 717

## Beschreibung

Die Erfindung betrifft einen optischen Sensor.

Derartige optische Sensoren dienen zur Erfassung von Objekten in einem Überwachungsbereich. Die optischen Sensoren, die allgemein als Lichttaster, Distanzsensoren, Reflexionslichtschranken, Lichtschranken und dergleichen ausgebildet sein können, weisen generell einen Sendelichtstrahlen emittierenden Sender, einen Empfangslichtstrahlen empfangenden Sender sowie eine Auswerteeinheit, in welcher aus den Empfangssignalen des Empfängers ein Objektfeststellungssignal generiert wird, auf. Die Empfänger können ein einzelnes Empfangslichtstrahlen empfangendes Empfangselement oder auch eine Mehrfachanordnung von derartigen Empfangselementen aufweisen.

Dem Sender eines solchen optischen Sensors ist typischerweise eine Sendeoptik vorgeordnet, die zur Strahlformung der Sendelichtstrahlen dient. Im einfachsten Fall besteht eine derartige Sendeoptik aus einer einzelnen Linse, die in einem vorgegebenen Abstand vom Sender angeordnet ist. Je nach Brennweite der Linse und nach Abstand der Linse zum Sender werden die durch die Linse geführten Sendelichtstrahlen auf einen bestimmten Punkt fokussiert oder es wird ein kollimierter Lichtstrahl erzeugt.

Ein erstes Problem einer derart ausgebildeten Sendeoptik besteht darin, dass bedingt durch die divergente Abstrahlcharakteristik des Senders, der beispielsweise von einer Leuchtdiode gebildet sein kann, stets ein gewisser Teil des Sendelichts nicht auf die in Abstand zum Sender angeordnete Sendeoptik geführt wird, so dass dieser Teil des Sendelichts für die Objektdetektion verloren ist. Um diesem Problem zu begegnen, ist bereits versucht worden, eine Sendeoptik mit zwei hintereinander angeordneten Linsen einzusetzen, wobei die erste Linse in geringem Abstand zum Sender angeordnet ist und dazu dient, möglichst viel Sendelicht vom Sender einzufangen, um dieses Sendelicht dann der dahinter liegenden zweiten Linse zuzuführen, die dann die eigentliche Strahlformung der Sendelichtstrahlen vornimmt. Nachteilig hierbei ist, dass auch die erste Linse noch in einem beträchtlichen Abstand zum Sender angeordnet sein muss, so dass auch in diesem Fall von der Sendeoptik nur ein unerwünscht kleiner Teil des Sendelichts eingefangen wird und zur Objektdetektion bereitsteht, wodurch die Nachweisempfindlichkeit des optischen Sensors reduziert wird. Weiterhin ist nachteilig, dass zur Ausbildung der Sendeoptik zwei separate Linsen eingesetzt werden müssen, die zum Sender und relativ zueinander ausgerichtet und dann lagefixiert werden müssen.

Ein weiteres Problem entsteht dann, wenn mit derartigen Sendeoptiken spezielle Strahlquerschnitte, insbesondere quadratische oder rechteckige Strahlquerschnitte, erzeugt werden sollen. Da mit den Linsen der Sendeoptik stets kreisförmige oder elliptische Strahlquerschnitte erzeugt werden, müssen als zusätzliche Elemente der Sendeoptik Blenden vorgesehen werden. Der Einsatz derartiger Blenden reduziert jedoch die Lichtmenge des zur Objektdetektion zur Verfügung stehenden Sendelichts noch weiter, was die Nachweisempfindlichkeit des optischen Sensors weiter reduziert.

Die nach dem Prioritätstag veröffentlichte DE 10 2008 014 349 betrifft einen optischen Sensor zur Erfassung von Objekten in einem Überwachungsbereich, mit einem Sendelichtstrahlen ermittierenden Sender, einem Empfangslichtstrahlen empfangenden Empfänger, einer Auswerteeinheit, in welcher in Abhängigkeit der Empfangssignale am Ausgang des Empfängers ein Objektfeststellungssignal generiert wird, und mit einer dem Sender nachgeordneten Sendeoptik zur Strahlformung der Sendelichtstrahlen. Die Sendeoptik schließt unmittelbar an den Sender an und weist einen Konzentrator auf, der ein Lichtführungselement für die Sendelichtstrahlen bildet. Hierzu erfolgt an der Mantelfläche des Konzentrators eine Totalreflexion der Sendelichtstrahlen. Dabei ist die dem Sender zugeordnete Stirnseite des Konzentratos als Einkoppelfläche für die Sendelichtstrahlen ausgebildet. An der dem Sender abgewandten Stirnseite des Konzentrators ist eine Austrittsfläche vorgesehen, welche ein Strahlformungsmittel für die Sendelichtstrahlen bildet.

Mit der so ausgebildeten Sendeoptik gelingt auf einfache Weise eine signifikante Erhöhung der Nachweisempfindlichkeit des optischen Sensors, da der direkt auf dem Sender aufsitzende Konzentrator nahezu das gesamte Sendelicht des Sender aufnimmt und zur Strahlformung nutzt, das heißt die optischen Verluste können im Vergleich zu herkömmlichen Sendeoptiken in Form einzelner Linsen signifikant reduziert werden.

Wesentlich hierbei ist, dass der Konzentrator, dessen Längsachse vorteilhaft mit der optischen Achse des Senders zusammenfällt, durch eine Totalreflexion der Sendelichtstrahlen an dessen Mantelfläche das komplette Sendelicht in dessen Innenraum führt, wobei bereits durch eine geeignete Formgebung der Mantelfläche die Strahlformung in gewünschter Weise vorgegeben oder zumindest beeinflusst wird.

Besonders vorteilhaft weist die Mantelfläche eine parabolische Form auf. Weiterhin können die Mantelflächen auch in Form von Freiformflächen oder zylindrischen Flächen ausgebildet sein.

Generell ist die Mantelfläche des Konzentrators so ausgebildet, dass an dieser eine Totalreflexion der Sendelichtstrahlen erfolgt, wodurch gewährleistet ist, dass nur ein geringer Teil der Sendelichtstrahlen über die Mantelfläche austritt.

Durch eine Verspiegelung der Mantelfläche kann ein Austreten von Sendelicht über diese Mantelfläche sogar vollständig verhindert werden.

Dadurch wird erreicht, dass nahezu das gesamte Sendelicht des Senders im Konzentrator geführt wird und über die Austrittsfläche des Konzentrators austritt, so dass es zur Objektdetektion zur Verfügung steht.

Ein weiterer wesentlicher Vorteil besteht darin, dass durch die Vorgabe der Austrittsfläche der Strahlquerschnitt in gewünschter Weise vorgegeben werden kann. Dies bedeutet insbesondere, dass Blenden als separate Bauteile zur Strahlformung, welche zu einer unerwünschten Reduzierung des zur Objektdetektion zur Verfügung stehenden Sendelichts führen, nicht mehr benötigt werden.

Im Vergleich zu Sendeoptiken, bei welchen Blenden neben einzelnen Linsen eingesetzt werden, wird somit einerseits die Ausbeute des nutzbaren Sendelichts verbessert und gleichzeitig die Teilezahl der Sendeoptik und damit der Montageaufwand zur Herstellung der Sendeoptik beträchtlich reduziert.

Dabei ist der Konzentrator der Sendeoptik besonders vorteilhaft von einem Kunststoff-Spritzgussteil gebildet, welches besonders kostengünstig und rationell herstellbar ist.

Durch eine geeignete Ausbildung der Austrittsfläche können die Strahlprofile der Sendelichtstrahlen flexibel vorgegeben werden. Besonders vorteilhaft weist der Konzentrator zur Generierung von Sendelichtstrahlen mit rechteckigen oder quadratischen Strahlquerschnitten eine torische Austrittsfläche auf.

Vorteilhaft bildet die Einkoppelfläche selbst ein optisches Element und ist hierzu als konvexe Fläche, insbesondere als sphärische Fläche ausgebildet, die unmittelbar an den Sender anschließt. Dadurch gelingt eine besonders vollständige Einkopplung der Sendelichtstrahlen vom Sender in den Konzentrator.

Insbesondere für den Fall, dass der Konzentrator der erfindungsgemäßen Sendeoptik keine verspiegelten Flächen aufweist, ist darauf zu achten, dass der Konzentrator so innerhalb des optischen Sensors gelagert wird, dass dessen Mantelfläche nicht großflächig in Kontakt mit anderen Gegenständen ist, da ansonsten über diese Kontaktstellen Sendelicht aus dem Konzentrator austreten würde.

Hierzu ist zur Lagefixierung der Sendeoptik eine Halterung vorgesehen, die punkt- oder linienförmige Kontaktelemente aufweist, die an der Mantelfläche des Konzentrators anliegen. Bevorzugt bildet die Halterung eine Dreipunktlagerung des Konzentrators.

Da somit die Halterung nur punktuell an der Mantelfläche anliegt, ist gewährleistet, dass über die Kontaktstellen, an welchen die Kontaktelemente der Halterung an der Mantelfläche des Konzentrators anliegen, nur ein sehr geringer Anteil des Sendelichts austritt.

Die EP 1 845 401 A1 betrifft einen optischen Sensor zur Erfassung von Objekten in einem Überwachungsbereich. Dieser umfasst als Optikelemente einen Sendelichtstrahlen emittierenden Sender und/oder einen Empfangslichtstrahlen empfangenden Empfänger. Diese sind innerhalb eines Gehäuses angeordnet. Ein Optikelement ist durch wenigstens ein Stellelement justierbar und das justierte Optikelement ist durch eine in das Gehäuse eingespritzte Niederdruckmasse lagefixiert, wobei die Niederdruckmasse ein Dichtmittel für das Gehäuse bildet.

Die US 2005/0219840 A1 betrifft einen Reflektor für eine Lichtquelle wie zum Beispiel einer Leuchtdiode. Der Reflektor weist eine trichterförmige Reflektorfläche auf. Durch Reflexion der von der Lichtquelle emittierten Lichtstrahlen erfolgt eine Strahlformung dieser Lichtstrahlen. Gemäß einer Ausführungsform kann der Reflektor als interner Reflektor mit einer außenliegenden Reflektorfläche ausgebildet sein. In diesem Fall bildet der Reflektor einen Massivkörper mit einer Austrittsfläche, an der die Lichtstrahlen gebeugt werden.

Der Erfindung liegt die Aufgabe zugrunde, einen optischen Sensor der eingangs genannten Art bereitzustellen, der hinsichtlich seiner Funktionalität verbessert ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor dient zur Erfassung von Objekten in einem Überwachungsbereich und umfasst einen Sendelichtstrahlen emittierenden Sender einem Empfangslichtstrahlen empfangenden Empfänger, eine Auswerteeinheit, in welcher in Abhängigkeit der Empfangssignale am Ausgang des Empfängers ein Objektfeststellungssignal generiert wird und einer dem Sender nachgeordneten Sendeoptik zur Strahlformung der Sendelichtstrahlen. Die Sendeoptik, die unmittelbar an den Sender anschließt, weist einen Konzentrator auf, der ein Lichtführungselement für die Sendelichtstrahlen bildet. Hierzu erfolgt an der Mantelfläche des Konzentrators eine Totalreflexion der Sendelichtstrahlen. Die dem Sender zugeordnete Stirnseite des Konzentrators ist als Einkoppelfläche für die Sendelichtstrahlen ausgebildet. An der dem Sender abgewandten Stirnseite des Konzentrators ist eine Austrittsfläche vorgesehen, welche ein Strahlformungsmittel für die Sendelichtstrahlen bildet. Die Einkoppelfläche begrenzt einen trichterförmigen Hohlraum, der an der Stirnseite des Konzentrators ausmündet. Die Einkoppelfläche weist eine Stirnfläche, deren Normalenvektor mit der Längsachse des Konzentrators zusammen fällt, und ein zur Längsachse des Konzentrators rotationssymmetrisches Mantelflächensegment auf, welches eine konische Form aufweist.

Durch die erfindungsgemäße Ausbildung der Einkoppelfläche derart, dass diese einen trichterförmigen Hohlraum begrenzt, können vom Sender emittierte parasitäre Sendelichtstrahlen, die zu einer Verschmierung des Sendelichtflecks führen, das heißt zu einem unscharfen Randbereich des Sendelichtflecks führen, ausgeblendet werden.

Somit wird mit dem erfindungsgemäßen optischen Sensor ein scharf begrenzter Sendelichtfleck am Ort der Objektdetektion erzeugt, wodurch eine hohe Nachweisempfindlichkeit des optischen Sensors erzielt wird.

Durch eine geeignete Dimensionierung der Geometrie des Konzentrators kann dabei die Geometrie des Sendelichtflecks, das heißt des Strahlquerschnitts der Sendelichtstrahlen, variabel und an die jeweilige Applikation des optischen Sensors angepasst, vorgegeben werden. Insbesondere kann ein quadratischer Sendelichtfleck der Sendelichtstrahlen erzeugt werden.

Der Konzentrator ist dabei bevorzugt rotationssymmetrisch bezüglich seiner Längsachse ausgebildet.

Somit werden aus dem Sender austretende Sendelichtstrahlen, deren Strahlachsen in einem Winkel zur Längsachse des Konzentrators verlaufen, der größer als ein Selektionswinkel ist, über das Mantelflächensegment aus dem Konzentrator ausgekoppelt und dadurch ausgeblendet.

Dadurch wird mit einfachen Mitteln ein scharf begrenzter, nicht verschmierter Sendelichtfleck der Sendelichtstrahlen generiert.

Diese Ausbildung des Konzentrators erweist sich insbesondere dann als vorteilhaft, wenn der Sender einen Reflektortrichter aufweist, auf dessen Boden wenigstens ein Sendelichtstrahlen emittierendes Sendeelement angeordnet ist.

Bei dieser Anordnung gelangt zwar der Großteil der vom Sendeelement emittierten Sendelichtstrahlen direkt zum Konzentrator und wird in diesen entlang der Längsachse des Konzentrators geführt, so dass die so geführten Sendelichtstrahlen nach Austritt aus dem Konzentrator ein Sendelichtbündel bilden, das zur Objektdetektion verwendet wird. Jedoch treten auch parasitäre Sendelichtstrahlen auf, die vom Sendeelement emittiert und dann erst nach Reflexion an der Wand des Reflektortrichters in den Konzentrator eingekoppelt werden. Diese parasitären Sendelichtstrahlen, deren Strahlachsen in einem Winkel zur Längsachse des Konzentrators verlaufen, der größer ist als der Selektionswinkel, werden durch die Geometrie der Einkoppelfläche vollständig ausgeblendet, so dass die Sendelichtstrahlen, die aus dem Konzentrator geführt sind, einen scharf begrenzten Sendelichtfleck aufweisen.

Im einfachsten Fall weist der Sender nur ein einzelnes Sendeelement im Reflektortrichter auf.

Alternativ weist der Sender mehrere nebeneinander angeordnete Sendeelemente auf, wobei die Sendeelemente Sendelichtstrahlen in unterschiedlichen Farben emittieren.

Der so ausgebildete optische Sensor bildet dann vorteilhaft einen Kontrasttaster, mit welchem eine Kontrastunterscheidung an Objekten durchgeführt werden kann.

Die Erfindung wird im Folgenden anhand der Zeichnungen erläutert. Es zeigen:
- Figur 1:: Schematische Darstellung eines optischen Sensors.
- Figur 2:: Darstellung des Senders und der Sende-optik des optischen Sensors gemäß Figur 1 nach DE 10 2008 014 349.
- Figur 3:: Querschnittdarstellung einer Halterung für die Sendeoptik gemäß Figur 2.
- Figur 4:: Darstellung eines ersten Ausführungsbeispiels der erfindungsgemäßen Sendeoptik mit zugeordnetem Sender für einen optischen Sensor gemäß Figur 1.
- Figur 5:: Darstellung eines zweiten Ausführungsbeispiels der erfindungsgemäßen Sendeoptik mit zugeordnetem Sender für einen optischen Sensor gemäß Figur 2.

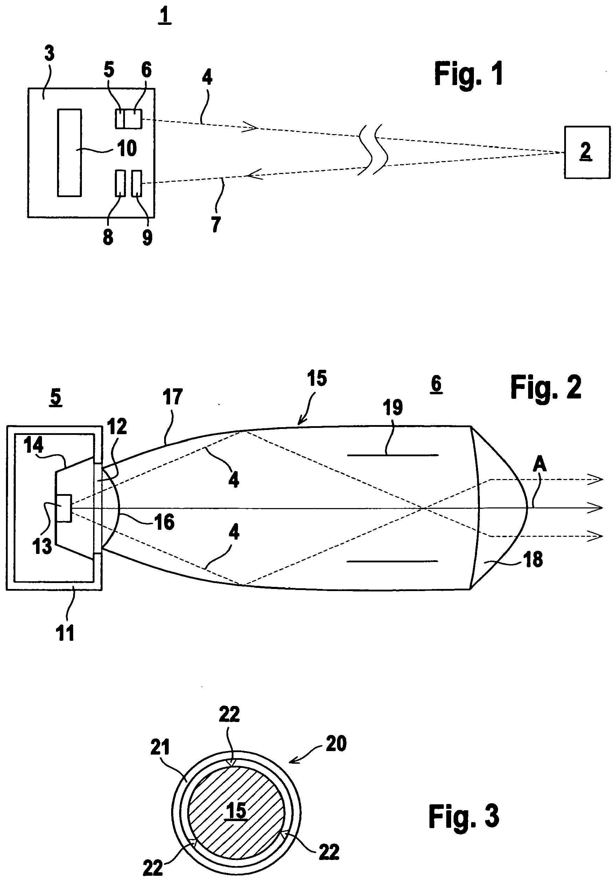

Figur 1 zeigt schematisch den Aufbau eines optischen Sensors 1 zur Erfassung von Objekten 2 in einem Überwachungsbereich. Der optische Sensor 1 ist im vorliegenden Fall als Lichttaster, insbesondere Kontrasttaster ausgebildet. Prinzipiell kann der optische Sensor auch als Distanzsensor, Lichtschranke, Reflexionslichtschranke oder dergleichen gebildet sein.

Der optische Sensor gemäß Figur 1 weist ein Sensorgehäuse 3 auf, in welchem ein Sendelichtstrahlen 4 emittierender Sender 5 mit einer zugeordneten Sendeoptik 6 und ein Empfangslichtstrahlen 7 empfangender Empfänger 8 mit einer zugeordneten Empfangsoptik 9 angeordnet sind. Der Sender 5 ist im vorliegenden Fall von einer Leuchtdiode gebildet. Prinzipiell kann der Sender 5 auch von einer Laserdiode gebildet sein. Der Empfänger 8 kann von einem einzelnen Empfangselement wie einer Photodiode gebildet sein. Alternativ kann der Empfänger 8 mehrere Empfangselemente aufweisen. Die Sendeoptik 6 dient zur Strahlformung der Sendelichtstrahlen 4. Die Empfangsoptik 9 dient zur Fokussierung der Empfangslichtstrahlen 7 auf den Empfänger 8.

Die vom Sender 5 emittierten Sendelichtstrahlen 4 werden in den Überwachungsbereich geführt und treffen auf ein zu detektierendes Objekt 2. Von dort werden die Sendelichtstrahlen 4 als Empfangslichtstrahlen 7 zurück zum Empfänger 8 reflektiert. Die dabei generierten Empfangssignale werden in einer Auswerteeinheit 10 ausgewertet, die ebenfalls im Sensorgehäuse 3 integriert ist. Die Auswerteeinheit 10 ist von einem Mikroprozessor oder dergleichen gebildet. In der Auswerteeinheit 10 wird beispielsweise durch eine Schwellwertbewertung ein Objektfeststellungssignal generiert. Das Objektfeststellungssignal wird über einen nicht dargestellten Ausgang des optischen Sensors 1 ausgegeben.

Figur 2 zeigt eine Ausführung des Senders 5 und der zugeordneten Sendeoptik 6 für den optischen Sensor 1 gemäß Figur 1 nach DE 10 20008 014 349. Der von einer Leuchtdiode gebildete Sender 5 ist in einem Gehäuse 11 integriert, in dessen Frontwand ein Fenster 12 vorgesehen ist, welches auch in Form einer transparenten Vergussmasse ausgebildet sein kann. Die Sendelichtstrahlen 4 werden von einem Sendeelement 13 in Form eines Chips 13 emittiert, der von einem Reflektortrichter 14 umgeben ist. Das vom Sendeelement 13 emittierte Sendelicht gelangt direkt oder nach Reflexion an dem Reflektortrichter 14 aus dem Sender 5. Die so generierten Sendelichtstrahlen 4 des Senders 5 weisen generell eine divergierte Strahlcharakteristik auf.

Die Sendeoptik 6 weist einen Konzentrator 15 auf, der in Form eines transparenten Kunststoff-Spritzgussteils ausgebildet ist. Wie aus Figur 2 ersichtlich, ist der Konzentrator 15 unmittelbar auf den Sender 5 so aufgesetzt, dass die Längsachse A des Konzentrators 15 mit der optischen Achse des Senders 5 zusammenfällt.

An der dem Sender 5 zugewandten Stirnseite des Konzentrators 15 ist eine Einkoppelfläche 16 vorgesehen, über welche die vom Sender 5 emittierten Sendelichtstrahlen 4 in den Konzentrator 15 eingekoppelt werden. Im vorliegenden Fall ist die Einkoppelfläche 16 konkav ausgebildet und bildet dadurch ein optisches Element mit welchem die Sendelichtstrahlen 4 in den Konzentrator 15 geführt werden. Die Einkoppelfläche 16 ist dabei als sphärische Fläche ausgebildet. Alternativ kann die Einkoppelfläche 16 auch als asphärische Fläche oder als Freiformfläche ausgebildet sein. Wesentlich ist generell, dass der Konzentrator 15 mit der Einkoppelfläche 16 direkt an den Sender 5 anschließt und dabei bevorzugt die gesamte Fläche des Fensters 12 abdeckt, so dass die gesamten oder wenigstens nahezu die gesamten Sendelichtstrahlen 4 über die Einkoppelfläche 16 in den Konzentrator 15 eingekoppelt werden.

Die Sendelichtstrahlen 4 werden dann innerhalb des Konzentrators 15 in Richtung dessen Längsachse A geführt. Die Mantelfläche 17 des Konzentrators 15 ist so geformt, dass an dieser eine Totalreflexion der Sendelichtstrahlen 4 erfolgt, wodurch gewährleistet ist, dass nahezu kein Sendelicht über die Mantelfläche 17 austritt. Besonders vorteilhaft ist die Mantelfläche 17 verspiegelt, so dass über diese keine Sendelichtstrahlen 4 mehr austreten.

Die Mantelfläche 17 des Konzentrators 15 ist so ausgebildet, dass eine vollständige Führung der Sendelichtstrahlen 4 im Konzentrator 15 erhalten wird. Zudem trägt die Gestaltung der Mantelfläche 17 auch zur Strahlformung der Sendelichtstrahlen 4 bei. Im vorliegenden Fall weist die Mantelfläche 17 eine parabolische Form auf. Prinzipiell kann die Mantelfläche 17 eine zumindest segementweise zylindrische Form aufweisen. Weiterhin kann die Mantelfläche 17 als Freiformfläche ausgebildet sein.

An der dem Sender 5 abgewandten Stirnseite des Konzentrators 15 ist eine Austrittsfläche 18 vorgesehen, über welche die Sendelichtstrahlen 4 aus dem Konzentrator 15 geführt werden. Durch eine spezifische Formgebung der Austrittsfläche 18 kann das Strahlprofil der Sendelichtstrahlen 4 genau vorgegeben werden. Im vorliegenden Ausführungsbeispiel weist die Austrittsfläche 18 die Form einer torischen Fläche auf. Mit einer derart ausgebildeten Austrittsfläche 18 können, ohne Einsatz zusätzlicher Optikelemente wie Blenden und dergleichen, Sendelichtstrahlen 4 mit einem quadratischen oder rechteckigen Strahlquerschnitt erzeugt werden. Generell kann die Austrittsfläche 18 auch von anderen konvexen Flächen wie sphärischen Flächen, asphärischen Flächen oder Freiformflächen gebildet sein.

In Figur 2 sind zwei von insgesamt drei Linien auf den Mantelflächen 17 dargestellt, die Auflagelinien 19 zur Auflage von Elementen einer Halterung 20 bilden, die in Figur 3 in einer Querschnittsdarstellung dargestellt ist.

Mit der Halterung 20 wird der die Sendeoptik 6 bildende Konzentrator 15 in dem Sensorgehäuse 3 des optischen Sensors 1 ortsfest gelagert, so dass er in der vorgesehenen Sollposition zu dem ebenfalls im Sensorgehäuse 3 ortsfest gelagerten Sender 5 positioniert ist.

Die Halterung 20 gemäß Figur 3 bildet eine Dreipunktlagerung für den Konzentrator 15. Die Halterung 20 weist eine ringförmige Aufnahme 21 auf, von deren Innenseite drei identisch ausgebildete Kontaktelemente 22 hervorstehen. Die Kontaktelemente 22 sind in Umfangsrichtung der Aufnahme 21 jeweils um 120° versetzt zueinander angeordnet. Die Kontaktelemente 22 sind linienförmig ausgebildet, wobei deren parallel zueinander verlaufende Längsachsen A senkrecht zur Zeichenebene in Figur 3 orientiert sind. Die Kontaktelemente 22 weisen jeweils zwei Seitenflächen auf, die auf eine Vorderkante zulaufen. Mit diesen Vorderkanten liegen die Kontaktelemente 22 der Halterung 20 entlang der Auflagelinien 19 an der Mantelfläche 17 des Konzentrators 15 an. Da somit die Kontaktelemente 22 nur linienförmige, keine großflächigen Auflageflächen auf der Mantelfläche 17 des Konzentrators 15 bilden, ist gewährleistet, dass dort nur ein sehr geringer Anteil der Sendelichtstrahlen 4 austritt.

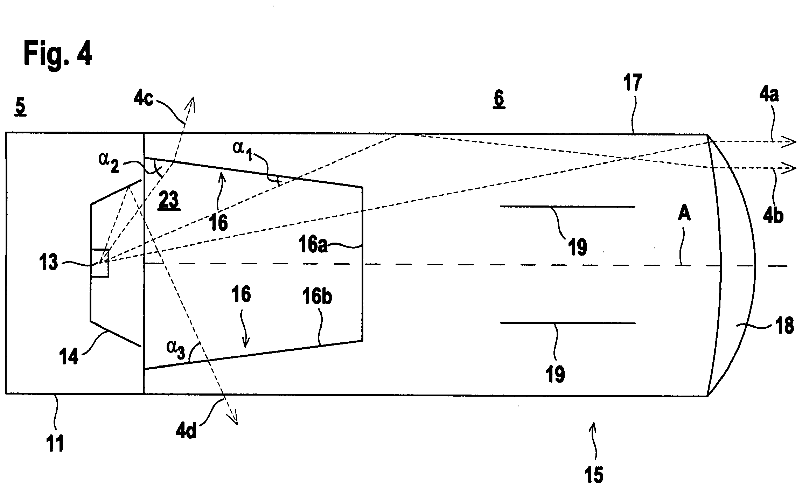

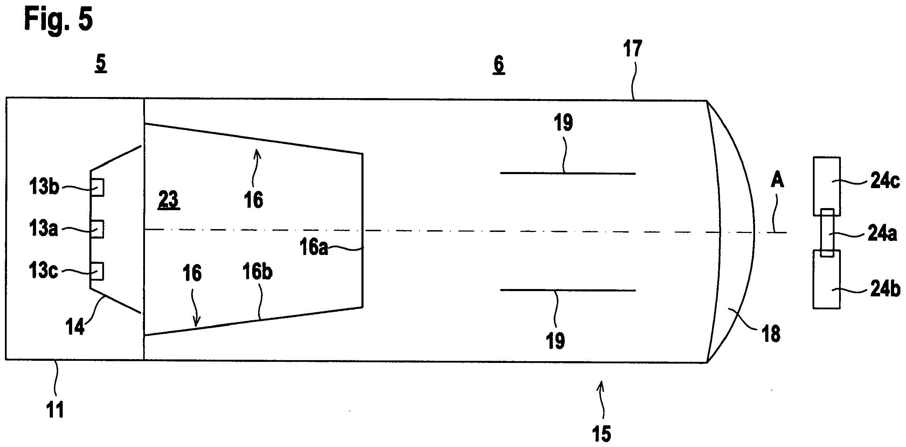

Die Figuren 4 und 5 zeigen zwei Ausführungsformen des erfindungsgemäßen Konzentrators 15 als Bestandteil der Sendeoptik 6 des optischen Sensors 1 mit dem jeweils zugeordneten Sender 5.

Die Konzentratoren 15 der Figur 4 und 5 weisen analog zur Figur 2 eine Mantelfläche 17 und eine konvexe Austrittsfläche 18 auf. Der Konzentrator 15 selbst ist rotationssymmetrisch bezüglich seiner Längsachse A ausgebildet und besteht bevorzugt aus einem Kunststoff-Spritzgussteil. An der Mantelfläche 17 erfolgt eine Totalreflexion der Sendelichtstrahlen 4, wobei hierzu die Mantelfläche 17 verspiegelt oder aufgeraut sein kann. Durch die spezifische Ausbildung der Austrittsfläche 18 kann ein spezifischer Strahlquerschnitt der Sendelichtstrahlen 4, das heißt eine spezifische Form des Sendelichtflecks, erhalten werden. Insbesondere kann ein quadratischer Sendelichtfleck erzeugt werden. Die Außenkontur des Konzentrators 15 gemäß Figur 4 beziehungsweise Figur 5 entspricht bevorzugt der Ausfuhrungsform gemäß Figur 2.

Analog zur Figur 2 sind bei dem Konzentrator 15 gemäß den Figuren 4 und 5 Auflagelinien 19 vorgesehen, auf welchen die Halterung gemäß Figur 3 aufgelegt werden kann.

Im Unterschied zur Figur 2 begrenzt bei dem Konzentrator 15 gemäß Figur 4 beziehungsweise Figur 5 die Einkoppelfläche 16 einen trichterförmigen Hohlraum 23, der an der dem Sender 5 zugewandten Stirnseite des Konzentrators 15 ausmündet.

Die Einkoppelfläche 16 ist dabei unterteilt in eine Stirnfläche 16a, die den Boden des Hohlraums 23 begrenzt und deren Normalenvektor mit der Längsachse A des Konzentrators 15 zusammenfällt, sowie in ein Mantelflächensegment 16b, das den Hohlraum 23 seitlich begrenzt.

Der Hohlraum 23 weist eine konische, sich der Stirnfläche 16a hin verjüngende Form auf, wobei der Querschnitt des Hohlraums 23 trapezförmig ist.

Durch diese Ausbildung der Einkoppelfläche 16 können vom Sender 5 emittierte, achsferne, das heißt in großen Winkeln zur Längsachse A des Konzentrators 15 verlaufende Sendelichtstrahlen 4, gezielt ausgeblendet werden, so dass nur achsnahe Sendelichtstrahlen 4 zur Bildung eines scharf begrenzten Sendelichtflecks beitragen.

Dies ist anhand des Ausführungsbeispiels gemäß Figur 4 veranschaulicht. Bei dieser Ausführungsform ist ein Sender 5 vorgesehen, der in einem Gehäuse 11 integriert ist. In dem Gehäuse 11 befindet sich ein Reflektortrichter 14, auf dessen Boden ein Sendeelement 13 in Form einer Leuchtdiode oder einer Laserdiode aufsitzt.

Die vom Sender 5 emittierten Sendelichtstrahlen 4 gelangen über die offene Oberseite des Reflektortrichters 14 zum Konzentrator 15. In Figur 4 sind zwei achsnahe Teilstrahlen 4a, 4b dargestellt. Der Teilstrahl 4a trifft direkt auf die Stirnfläche 16a und gelangt so in den Konzentrator 15. Der Teilstrahl 4b trifft in einem Winkel α₁ auf das Mantelflächensegment 16b, der kleiner als ein durch die Geometrie des Mantelflächensegments 16b bestimmter Selektionswinkel ist, so dass der Teilstrahl 4b über das Mantelflächensegment 16b auf die Mantelfläche 17 des Konzentrators 15 so geführt wird, dass der Teilstrahl 4b dort total reflektiert wird und dann ebenso wie der Teilstrahl 4a über die Austrittsfläche 18 aus dem Konzentrator 15 austritt. Damit tragen diese Teilstrahlen 4a, 4b zur Bildung des Sendelichtflecks der Sendelichtstrahlen 4, die zur Objektdetektion im Überwachungsbereichs dienen, bei.

Weiterhin sind in Figur 4 zwei achsfreie Teilstrahlen 4c, 4d dargestellt. Der Teilstrahl 4c gelangt vom Sendeelement 13 ohne Reflexion am Reflektortrichter 14 in den Hohlraum 23 und trifft in einen Winkel α₂ auf das Mantelflächensegment 16b, der größer als der Selektionswinkel ist. Damit trifft der Teilstrahl 4c in einem Winkel auf die Mantelfläche 17 der Konzentratoren 15, der größer ist als der Grenzwinkel der Totalreflexion. Damit wird dieser Teilstrahl 4c über die Mantelfläche 17 aus dem Konzentrator 15 ausgeleitet und trägt nicht zur Bildung des Sendelichtflecks der Sendelichtstrahlen 4, der zur Objektdetektion genutzt wird, bei. Der vom Sendeelement 13 emittierte Teilstrahl 4d wird zunächst an der Seitenwand des Reflektortrichters 14 reflektiert und trifft dann in einem Winkel α₃ auf das Mantelflächensegment 16b, der ebenfalls größer als der Selektionswinkel ist. Damit trifft auch der Teilstrahl 4d in einem Winkel auf die Mantelfläche 17 des Konzentrators 15, der größer ist als der Winkel der Totalreflexion. Somit wird auch der Teilstrahl 4d über die Mantelfläche 17 aus dem Konzentrator 15 geführt und somit ausgeblendet.

Generell werden durch Vorgabe der Hohlraumgeometrie und damit der Geometrie der Einkoppelfläche 16 achsferne Sendelichtstrahlen-Anteile ausgeblendet, so dass nur achsnahe Sendelichtstrahlen-Anteile über die Austrittsfläche 18 des Konzentrators 15 in den Überwachungsbereich gelangen. Dadurch wird ein scharf begrenzter, symmetrisch zur Längsachse liegender Sendelichtfleck der Sendelichtstrahlen 4 generiert.

Die Ausführungsform gemäß Figur 5 unterscheidet sich von der Ausführungsform gemäß Figur 4 dadurch, dass der Sender 5 mehrere nebeneinander liegende, auf dem Boden des Reflektortrichters 15 angeordnete Sendeelemente 13a, 13b, 13c aufweist, die zusammen oder einzeln nacheinander aktiviert werden können und welche Sendelichtstrahlen 4 in unterschiedlichen Farben emittieren.

Im vorliegenden Fall sind drei Sendeelemente 13a, b, c vorgesehen. Das zentrale Sendeelement 13a emittiert grüne Sendelichtstrahlen 4, wodurch ein symmetrisch zur Längsachse liegender Lichtfleck 24a generiert wird. Die daneben liegenden Sendeelemente 13b, 13c emittieren rote beziehungsweise blaue Sendelichtstrahlen 4, wodurch achsversetzt neben dem grünen Lichtfleck 24a ein roter Lichtfleck 24b und ein blauer Lichtfleck 24c generiert wird. Die Ausblendung achsferner Teil-Sendelichtstrahlen erfolgt analog zur Ausführungsform gemäß Figur 4 durch eine geeignete Wahl der Geometrie der Einkoppelfläche 16, insbesondere des Mantelflächensegments 16b.

### Bezugszeichenliste

- (1): Optischer Sensor
- (2): Objekt
- (3): Sensorgehäuse
- (4): Sendelichtstrahlen
- (4a): Teilstrahl
- (4b): Teilstrahl
- (4c): Teilstrahl
- (4d): Teilstrahl
- (5): Sender
- (6): Sendeoptik
- (7): Empfangslichtstrahlen
- (8): Empfänger
- (9): Empfangsoptik
- (10): Auswerteeinheit
- (11): Gehäuse
- (12): Fenster
- (13): Sendeelement
- (13a): Sendeelement
- (13b): Sendeelement
- (13c): Sendeelement
- (14): Reflektortrichter
- (15): Konzentrator
- (16): Einkoppelfläche
- (16a): Stirnfläche
- (16b): Mantelflächensegment
- (17): Mantelfläche
- (18): Austrittsfläche
- (19): Auflagelinie
- (20): Halterung
- (21): Aufnahme
- (22): Kontaktelement
- (23): Hohlraum
- (24a): Lichtfleck
- (24b): Lichtfleck
- (24c): Lichtfleck

- (A): Längsachse

## Patentansprüche

1. Optischer Sensor (1) zur Erfassung von Objekten (2) in einem Überwachungsbereich, mit einem Sendelichtstrahlen (4) emittierenden Sender (5), einem Empfangslichtstrahlen (7) empfangenden Empfänger (8), einer Auswerteeinheit (10), in welcher in Abhängigkeit der Empfangssignale am Ausgang des Empfängers (8) ein Objektfeststellungssignal generiert wird, und mit einer dem Sender (5) nachgeordneten Sendeoptik (6) zur Strahlformung der Sendelichtstrahlen (4), wobei die Sendeoptik (6) unmittelbar an den Sender (5) anschließt und einen Konzentrator (15) aufweist, der ein Lichtführungselement für die Sendelichtstrahlen (4) bildet, wobei hierzu an der Mantelfläche (17) des Konzentrators (15) eine Totalreflexion der Sendelichtstrahlen (4) erfolgt, wobei die dem Sender (5) zugeordnete Stirnseite des Konzentrators (15) als Einkoppelfläche (16) für die Sendelichtstrahlen (4) ausgebildet ist, und wobei an der dem Sender (5) abgewandten Stirnseite des Konzentrators (15) eine Austrittsfläche (18) vorgesehen ist, welche ein Strahlformungsmittel für die Sendelichtstrahlen (4) bildet, **dadurch gekennzeichnet, dass** die Einkoppelfläche (16) einen trichterförmigen Hohlraum (23) begrenzt, der an der Stirnseite des Konzentrators (15) ausmündet, wobei die Einkoppelfläche eine Stirnfläche (16a), deren Normalenvektor mit der Längsachse des Konzentrators (15) zusammenfällt, und ein zur Längsachse des Konzentrators rotationssymmetrisches Mantelflächensegment (16b) aufweist, welches eine konische Form aufweist.

2. Optischer Sensor nach Anspruch 1, **dadurch gekennzeichnet, dass** der Konzentrator (15) rotationssymmetrisch bezüglich seiner Längsachse ausgebildet ist.

3. Optischer Sensor nach Anspruch 1 oder 2, **dadurch gekennzeichnet, dass** aus dem Sender (5) austretende Sendelichtstrahlen (4), deren Strahlachsen in einem Winkel zur Längsachse des Konzentrators (15) verlaufen, der größer als ein Selektionswinkel ist, über das Mantelflächensegment (16b) aus dem Konzentrator (15) ausgekoppelt und dadurch ausgeblendet werden.

4. Optischer Sensor nach einem der Ansprüche 1 bis 3, **dadurch gekennzeichnet, dass** sich der Durchmesser des Hohlraums (23) von der dem Sender (5) zugewandten Stirnseite des Konzentrators (15) zur Stirnfläche der Einkoppelfläche (16) hin verjüngt.

5. Optischer Sensor nach einem der Ansprüche 1 bis 4, **dadurch gekennzeichnet, dass** der Sender (5) einen Reflektortrichter (14) aufweist, auf dessen Boden wenigstens ein Sendelichtstrahlen (4) emittierendes Sendeelement (13, 13a, b, c) angeordnet ist.

6. Optischer Sensor nach Anspruch 5, **dadurch gekennzeichnet, dass** der Sender (5) mehrere nebeneinander angeordnete Sendeelemente (13a, b, c) aufweist, welche Sendelichtstrahlen (4) in unterschiedlichen Farben emittieren.

7. Optischer Sensor nach einem der Ansprüche 1 bis 6, **dadurch gekennzeichnet, dass** die Sendelichtstrahlen (4) im Konzentrator (15) entlang dessen Längsachse geführt sind.

8. Optischer Sensor nach einem der Ansprüche 1 bis 7, **dadurch gekennzeichnet, dass** der Konzentrator (15) eine parabolische Mantelfläche (17) aufweist, oder dass die Mantelfläche (17) des Konzentrators (15) eine zylindrische Form aufweist oder eine Freiformfläche bildet.

9. Optischer Sensor nach einem der Ansprüche 1 bis 8, **dadurch gekennzeichnet, dass** die Austrittsfläche (18) eine konvexe Fläche ist.

10. Optischer Sensor nach Anspruch 9, **dadurch gekennzeichnet, dass** die Austrittsfläche (18) des Konzentrators (15) als torische Fläche als sphärische oder asphärische Fläche oder als Freiformfläche ausgebildet ist.

11. Optischer Sensor nach einem der Ansprüche 1 bis 10, **dadurch gekennzeichnet, dass** der Konzentrator (15) aus Kunststoff besteht, und dass die Mantelfläche (17) des Konzentrators (15) verspiegelt oder aufgeraut ist.

12. Optischer Sensor nach einem der Ansprüche 1 bis 11, **dadurch gekennzeichnet, dass** zur Lagefixierung der Sendeoptik (6) eine Halterung (20) vorgesehen ist, die punkt- oder linienförmige Kontaktelemente (22) aufweist, die an der Mantelfläche (17) des Konzentrators (15) anliegen, und dass die Halterung (20) eine Dreipunktlagerung des Konzentrators (15) bildet.

13. Optischer Sensor nach einem der Ansprüche 1 bis 12, **dadurch gekennzeichnet, dass** der Sender (5) von einer Laserdiode oder eine Leuchtdiode gebildet ist.

## Claims

1. Optical sensor (1) for detection of objects (2) in a monitoring region, comprising a transmitter (5) emitting transmitted light beams (4), a receiver (8) receiving received light beams (7), an evaluating unit (10) in which an object detection signal is generated in dependence on the received signals at the output of the receiver (8), and a transmitting optical system (6), which is arranged downstream of the transmitter (5), for beam shaping of the transmitted light beams (4), wherein the transmitting optical system (6) is directly connected with the transmitter (5) and comprises a concentrator (15) which forms a light guide element for the transmitted light beams (4), wherein for that purpose total reflection of the transmitted light beams (4) takes place at the circumferential surface (17) of the concentrator (15), wherein the end face, which is associated with the transmitter (5), of the concentrator (15) is constructed as a coupling-in surface (16) for the transmitted light beams (4), and wherein an exit surface (18) which forms beam shaping means for the transmitted light beams (4) is provided at the end face of the concentrator (15) remote from the transmitter (5), **characterised in that** the coupling-in surface (16) bounds a funnel-shaped cavity (23) which opens at the end face of the concentrator (15), wherein the coupling-in surface has an end surface (16a), the normal vector of which coincides with the longitudinal axis of the concentrator (15), and a circumferential surface segment (16b), which is rotationally symmetrical with respect to the longitudinal axis of the concentrator and which has a conical shape.

2. Optical sensor according to claim 1, **characterised in that** the concentrator (15) is formed to be rotationally symmetrical with respect to its longitudinal axis.

3. Optical sensor according to claim 1 or 2, **characterised in that** transmitted light beams (4), which issue from the transmitter (5) and the beam axes of which extend at an angle relative to the longitudinal axis of the concentrator (15) greater than a selection angle, are coupled out of the concentrator (15) by way of the circumferential surface segment (16b) and thereby excluded.

4. Optical sensor according to any one of claims 1 to 3, **characterised in that** the diameter of the cavity (23) tapers from the end face, which faces the transmitter (5), of the concentrator (15) towards the end surface of the coupling-in surface (16).

5. Optical sensor according to any one of claims 1 to 4, **characterised in that** the transmitter (5) comprises a reflector funnel (14), on the base of which at least one transmitting element (13, 13a, b, c) emitting transmitted light beams (4) is arranged.

6. Optical sensor according to claim 5, **characterised in that** the transmitter (5) comprises a plurality of transmitting elements (13a, b, c) which are arranged adjacent to one another and which emit transmitted light beams (4) in different colours.

7. Optical sensor according to any one of claims 1 to 6, **characterised in that** the transmitted light beams (4) are guided in the concentrator (15) along the longitudinal axis thereof.

8. Optical sensor according to any one of claims 1 to 7, **characterised in that** the concentrator (15) has a parabolic circumferential surface (17) or the circumferential surface (17) of the concentrator (15) has a cylindrical form or defines a free-form surface.

9. Optical sensor according to any one of claims 1 to 8, **characterised in that** the exit surface (18) is a convex surface.

10. Optical sensor according to claim 9, **characterised in that** the exit surface (18) of the concentrator (15) is formed as a toroidal surface, as a spherical surface, as an aspherical surface or as a free-form surface.

11. Optical sensor according to any one of claims 1 to 10, **characterised in that** the concentrator (15) consists of plastics material and the circumferential surface (17) of the concentrator (15) is reflectively covered or roughened.

12. Optical sensor according to any one of claims 1 to 11, **characterised in that** a mount (20) is provided for positional fixing of the transmitting optical system (6) and comprises punctiform or lineal contact elements (22) which bear against the circumferential surface (17) of the concentrator (15) and that the mount (20) forms a three-point mounting of the concentrator (15).

13. Optical sensor according to any one of claims 1 to 12, **characterised in that** the transmitter (5) is formed by a laser diode or a light-emitting diode.

## Revendications

1. Capteur optique (1) pour détecter des objets (2) dans une zone de surveillance, comprenant un émetteur (5) émettant des rayons lumineux d'émission (4), un récepteur (8) recevant des rayons lumineux de réception (7), une unité d'évaluation (10) dans laquelle un signal de détection d'objet est généré en fonction des signaux de réception présents à la sortie du récepteur (8), et comprenant une optique d'émission (6) placée après l'émetteur (5) pour mettre en forme le faisceau des rayons lumineux d'émission (4), dans lequel l'optique d'émission (6) fait directement suite à l'émetteur (5) et présente un concentrateur (15) qui forme un élément de guidage de lumière pour les rayons lumineux d'émission (4), une réflexion totale des rayons lumineux d'émission (4) ayant lieu à cet effet sur la surface extérieure (17) du concentrateur (15), dans lequel la face frontale du concentrateur (15) associée à l'émetteur (5) est conçue comme surface d'entrée (16) pour les rayons lumineux d'émission (4) et dans lequel, sur la face frontale du concentrateur (15) éloignée de l'émetteur (5), est prévue une surface de sortie (18) qui forme un moyen de formation de faisceau pour les rayons lumineux d'émission (4), **caractérisé en ce que** la surface d'entrée (16) limite une cavité (23) en forme d'entonnoir qui débouche à la face frontale du concentrateur (15), la surface d'entrée (16) présentant une surface frontale (16a), dont le vecteur normal coïncide avec l'axe longitudinal du concentrateur (15), et un segment de surface extérieure (16b) à symétrie de révolution par rapport à l'axe longitudinal du concentrateur, qui présente une surface conique.

2. Capteur optique selon la revendication 1, **caractérisé en ce que** le concentrateur (15) est réalisé à symétrie de révolution par rapport à son axe longitudinal.

3. Capteur optique selon la revendication 1 ou 2, **caractérisé en ce que** des rayons lumineux d'émission (4) sortant de l'émetteur (5) dont les axes de faisceau font avec l'axe longitudinal du concentrateur (15) un angle qui est supérieur à un angle de sélection sont extraits du concentrateur (15) par le segment de surface extérieure (16b) et donc occultés.

4. Capteur optique selon l'une des revendications 1 à 3, **caractérisé en ce que** le diamètre de la cavité (23) diminue de la face frontale du concentrateur (15) tournée vers l'émetteur (5) vers la surface frontale de la surface d'entrée (16).

5. Capteur optique selon l'une des revendications 1 à 4, **caractérisé en ce que** l'émetteur (5) présente un pavillon réflecteur (14) sur le fond duquel est disposé au moins un élément émetteur (13, 13a, b, c) émettant des rayons lumineux d'émission (4).

6. Capteur optique selon la revendication 5, **caractérisé en ce que** l'émetteur (5) présente plusieurs éléments émetteurs (13a, b, c) disposés les uns à côté des autres, qui émettent des rayons lumineux d'émission (4) de couleurs différentes.

7. Capteur optique selon l'une des revendications 1 à 6, **caractérisé en ce que** les rayons lumineux d'émission (4) sont guidés dans le concentrateur (15) le long de son axe longitudinal.

8. Capteur optique selon l'une des revendications 1 à 7, **caractérisé en ce que** le concentrateur (15) présente une surface extérieure (17) parabolique ou que la surface extérieure (17) du concentrateur (15) présente une forme cylindrique ou une surface de forme libre.

9. Capteur optique selon l'une des revendications 1 à 8, **caractérisé en ce que** la surface de sortie (18) est une surface convexe.

10. Capteur optique selon la revendication 9, **caractérisé en ce que** la surface de sortie (18) du concentrateur (15) est réalisée sous la forme d'une surface torique, d'une surface sphérique ou asphérique ou d'une surface de forme libre.

11. Capteur optique selon l'une des revendications 1 à 10, **caractérisé en ce que** le concentrateur (15) est en matière plastique et que la surface extérieure (17) du concentrateur (15) est réfléchissante ou rugueuse.

12. Capteur optique selon l'une des revendications 1 à 11, **caractérisé en ce qu'**un élément de retenue (20), qui présente des éléments de contact (22) ponctuels ou linéaires qui s'appliquent sur la surface extérieure (17) du concentrateur (15), est prévu pour la fixation en position de l'optique d'émission (6), et que l'élément de retenue (20) forme un support à trois points du concentrateur (15).

13. Capteur optique selon l'une des revendications 1 à 12, **caractérisé en ce que** l'émetteur (5) est formé par une diode laser ou une diode luminescente.
